# EUROPEAN PATENT APPLICATION

(11) **EP 1 146 027 A1**
(43) Date of publication of application: **17.10.2001**
(21) Application number: 00830271.3
(22) Date of filing: 10.04.2000
(51) Int. Cl.: C05F 17/02, C05F 17/00

(54) **Treatment of organic wastes**

(71) Applicant: BIOE S.R.L., 20100 Milano (IT)
(72) Inventor: Allievi, Elisa, Barlassina (IT)
(74) Representative: Gandini, Claudio

(57) **Abstract**

This invention allows to obtain compost from the organic portion of solid wastes, that can be used as fertilizer or soil amendment.

The subject system allows to obtain from any organic wastes, high quality composts in a very limited time.

The process is managed by a PLC circuit, complete with an historical file.

Working staff in charge with the bio-stabilization process is reduced to a minimum.

The advantages in terms of costs, simple operation, time for the production of compost and product quality are evident.

## Description

Object of this invention is a system for the treatment of the organic portion of solid wastes through the biostabilization of their humid component, with complete control over the release of smells in the external environment, of bacteria, fungus hyphae and percolates.

The system applies to all those types of wastes presenting at least a minimum portion of organic component, i.e. urban solid wastes, sludge, algae, agroindustrial wastes, dung, etc.

The biostabilization system provides for the correct treatment of increasingly bigger quantities of biodegradable wastes, through a simple and economic process, presenting high tolerability at environmental level, and fully complying with the new legal regulations, thus avoiding that wastes be sent to the dump without the necessary preliminary treatment.

The wastes disposal law presently in force (Ronchi law), provides that biodegradable wastes cannot be transferred to the dump without a preliminary treatment, to prevent their indiscriminate use. Actually untreated wastes are characterized by large overall volumes, and by the release of remarkable quantities of percolates and biogases, with consequent release of smells in the atmosphere, as well as of germs and spores in the external environment.

In general, the objective of biostabilization is to modify the chemical and physical characteristics of wastes, in order to reduce the weight and volume of its organic component.

The process may be realized either in the absence of oxygen (anaerobic process or digestion) or in presence of oxygen to produce the oxidation of the organic wastes and, consequently an anaerobic reaction up to its complete stabilization, once the presence of the wastes organic component is exhausted (mineralization).

In the specific case of this invention, wastes biostabilization occurs through the exothermic reaction of oxidation, by insufflating external ambient air - which is rich in gases such as O₂ and N2 - into a trapezoidally shaped heap of wastes (aerobic oxidation of wastes).

Depending upon the type of wastes subjected to the process (organic wastes from differentiated collection, brushwood, algae or urban solid wastes from undifferentiated collection), and after adequate screening, a first or second quality compost can be obtained from subscreening, and a wastes combustible from the combustion of the subproduct coming from the first screening.

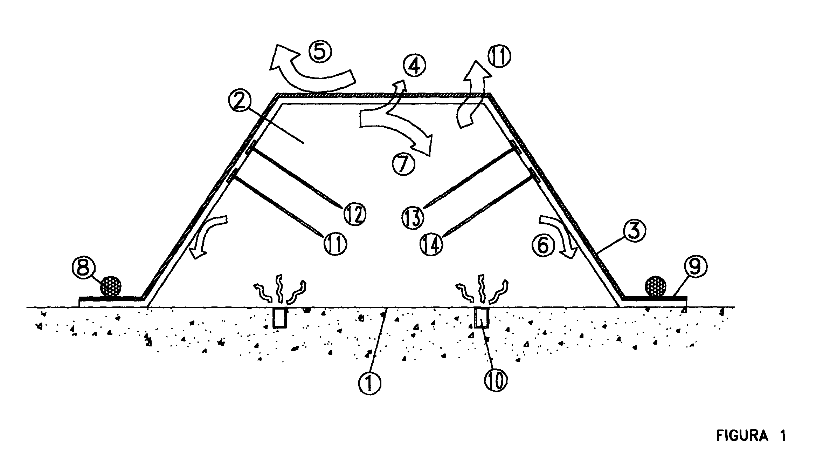

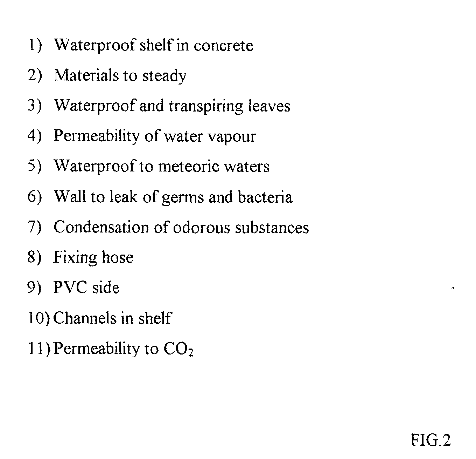

As shown in figure 1 and 2, wastes presenting the above features are arranged in trapezoidal heaps, with a maximum height of 3 meters, an optimum width of approx. 7 meters and a maximum depth of 50 meters, onto a waterproof concrete bed, under whose surface ducts have been embedded, in order not to impair the operation of the mechanical shovels bulding-up the heap.

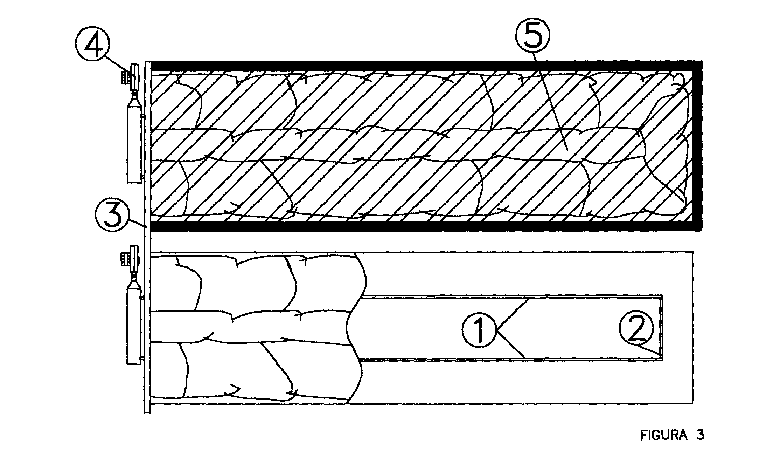

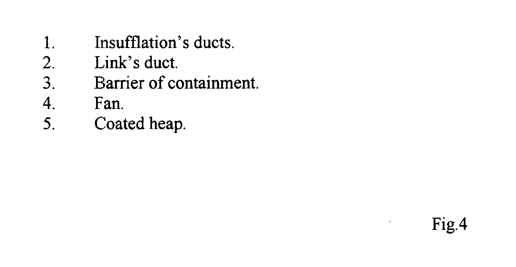

The ducts, arranged as above, (at least 2 per heap) ( fig. 2 and 3) may be made either a stainless steel pipe with holes of variable size, or a concrete U-shaped tube, whose upper side is closed with a plastic or metal cover, provided with an adequate number of calibrated holes of optimized diameter, to release the air required for the oxidation of the heap biomass.

The hole diameters represent one of the main parameters determining the success of the wastes biostabilization process.

On their head side, ducts are connected to a fan located outside the heap, behind a concrete containment wall.

The fan is generally operated by an electric tree-phase motor equipped with an inverter, to change the number of revolutions and the relevant flow, and shall be able to assure the proper supply of air under pressure inside the heap, in order to oppose the load losses generated inside the ventilation ducts, whose excess could transform the process into an anaerobic situation and, consequently, into rottenness.

On their end side, ducts are all interconnected through a transverse pipe whose section is sufficient to form an insufflated air lung inside the fan.

Moreover, this connection pipe favors a better distribution of air inside the biomass, thus avoiding preferential paths and consequently the formation of air vents inside the heap.

Furthermore, all the ventilation ducts are slightly sloped towards the connection pipe, to allow for the collection of any percolates, that might eventually form during the initial stages of the process, into proper tanks.

Once formed in a heap, the material to be treated is separated from the outside environment through a waterproof transpiring cover, whose function is assured by its foam PTFE membrane (Goretex).

The laminate, generally green on the outside and white inside, consists of a three-layers sandwich; the two outer layers, resistant to UVA radiation, are made of polyester fibers and serve the mechanical purpose of facilitating handling.

The inner layer , made of foam PTFE, represents the so called functional layer, since it confers to the laminate steam transpiration abilities and waterproofing capacity to liquid water.

Therefore, should this be required by local regulations, the features of foam PTFE, as described above, enable to carry out the biostabilization process in the open air. Actually rain waters do not penetrate through the membrane, therefore preventing biomass fluidization, while the steam released by the wastes during intense maturation does.

In addition to such essential features, the laminate micro-holes , 0,2 □m diameter, are able to retain spores and bacteria inside the biomass, thus assuring improved hygienic and environmental conditions for the involved operators.

Moreover, for effective process results, the laminate steam transmission factor (MTVR) should be equal to or higher than 5000 g/m2/24h.

Lower values prevent a good ventilation of the material to be stabilized and slow down the maturation process.

The biomass overrun effect, afforded by the laminate, favors the control of bad smells generated inside by the presence of substances.

The high temperature variation between the inside (> 70°C) and the outside of the heap, generates a chemical and physical effect by which the molecules of the most smelling compounds (amines, mercaptans, terpenes, acid fats, etc), due to condensation, turn into the liquid stage on the surface layer of the heap, thus providing new humidity for the best development of the thermophile bacterial flora, which maintains the conditions necessary for the biologic process.

The same reduction effect of the compounds coming out form the cover is also evident on a wide range of chlorinated compounds.

Only minimum traces of smelling compounds come out from the heap, while high quantities of odorless CO₂ are pushed upward by the insufflation of new fresh air from the bottom.

The laminate cover is fixed to the ground, against wind, by laying on its periphery a fire hose filled with water in order to make it heavy.

To facilitate the heap coverage, the laminate is divided into more sections of equal size, whose edges are kept together by a velcro tape, to avoid lifting by the wind.

All the outer edge of the laminate is provided with a yellow PVC band on which the ballasting hose is arranged: such band is provided with textile rings and handles to facilitate handling.

In order to assure a profitable and effective wastes biostabilization process, it is necessary to create, but especially to maintain the ideal working conditions for the thermophile bacteria inside the biomass, through the automatic constant control of some process parameters described here below.

Actually, this invention makes possible to achieve reproducible results in a maximum treatment time per heap of 15 to 20 days for the intensive maturation stage, without requiring to turn the heap over : such operation would in fact stop the activity for a few days, thus preventing the homogeneous distribution of fungus hyphae in the biomass.

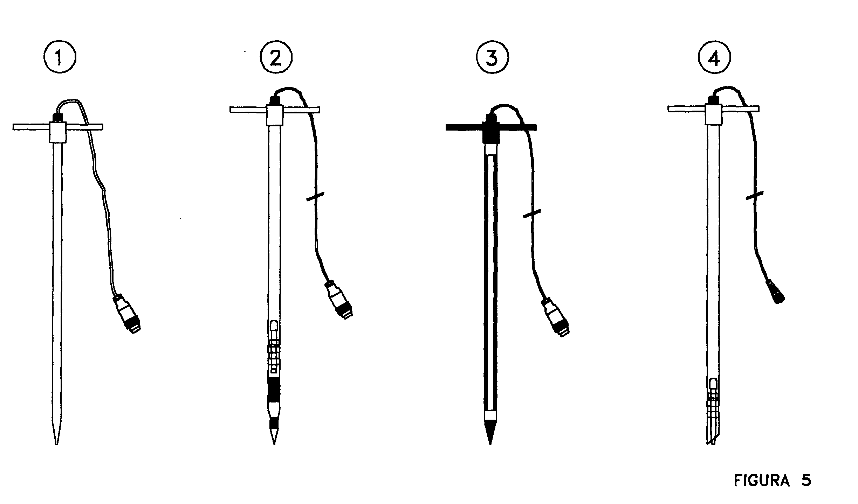

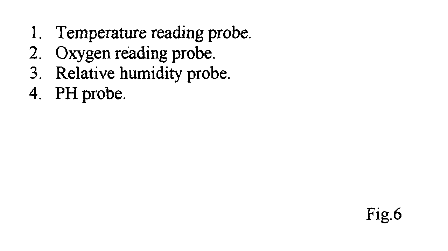

In order to achieve the optimum control over the various process parameters, namely, temperature, humidity, oxygen and pH, it is necessary to make available for the invention an automatic probe system to carry out the required sensing and measurements.( fig. 5 and 6)

The signal perceived by each of the four probes, constituting the measuring set for every heap, is sent through an electric conductor to a PLC circuit, setting the relevant parameters.

The operator sets the values on the PLC and, through a graphic interface, on the monitor of a PC provided with a specific software, integrating this invention.

Each PLC card is able to handle up to three sets of probes, that is three different heaps of material to be treated.

On the other hand, the computer can handle the signals coming from more PLC circuits; consequently on the PC screen we can read, from time to time, the different measurement data, with the number of heap to which said data refer. This makes available an historical file of all data recorded during the different process stages, for use when needed.

The temperature probe operates over a range of temperatures included between 0° and 100°C and consists of an AISI 316 stainless steel bar, approx. 1000 mm long, with a transverse metal handle on the upper side. The connecting cable, complete with gold plated contacts connector, comes out from this handle, through a tear resistant cable holder.

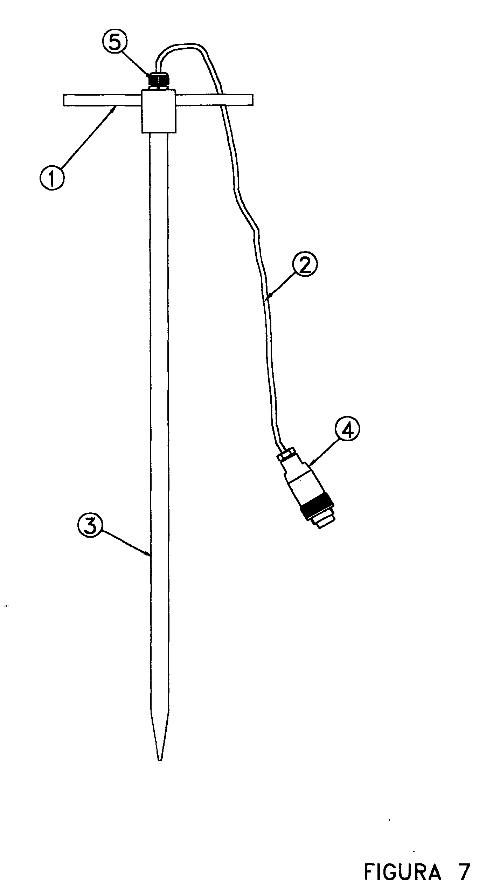

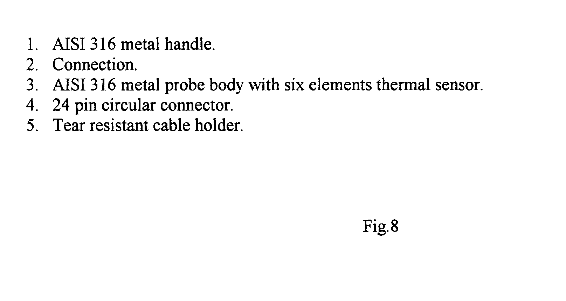

A six elements thermal sensor is located inside the probe body; such elements, arranged approx. 200 mm apart, are able to detect the heap thermal gradient as a function of the material depth. Such thermal gradient is processed and visualized on the computer screen (see figure 7 and 8).

The correct temperature control inside the biomass accelerates the wastes biostabilization process, thus favoring the reproduction of thermophile microorganisms, useful for the aerobic digestion activity and preventing their death due to excessively high or low temperatures.

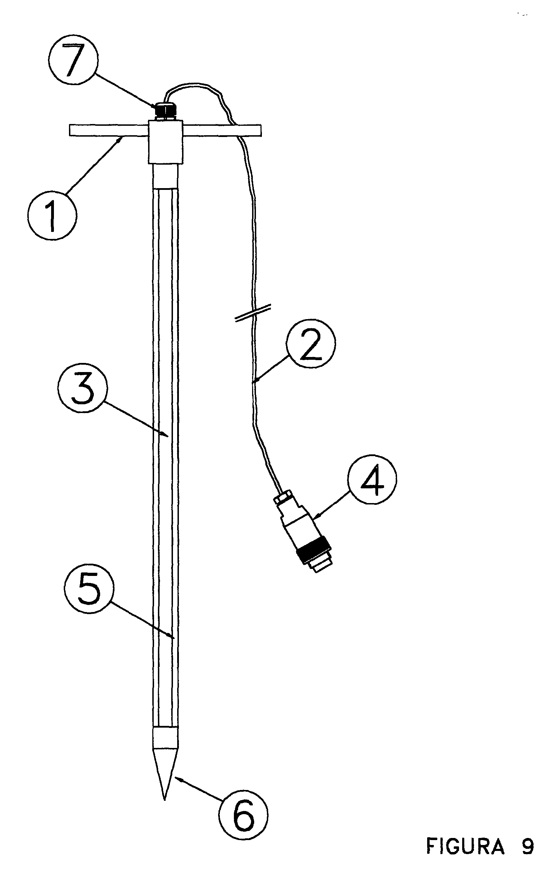

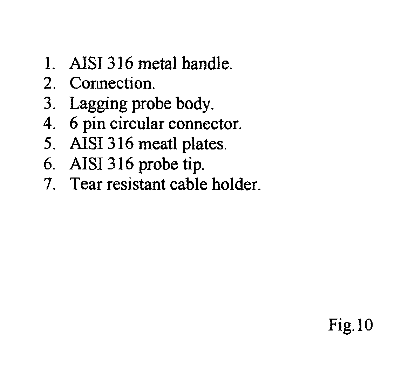

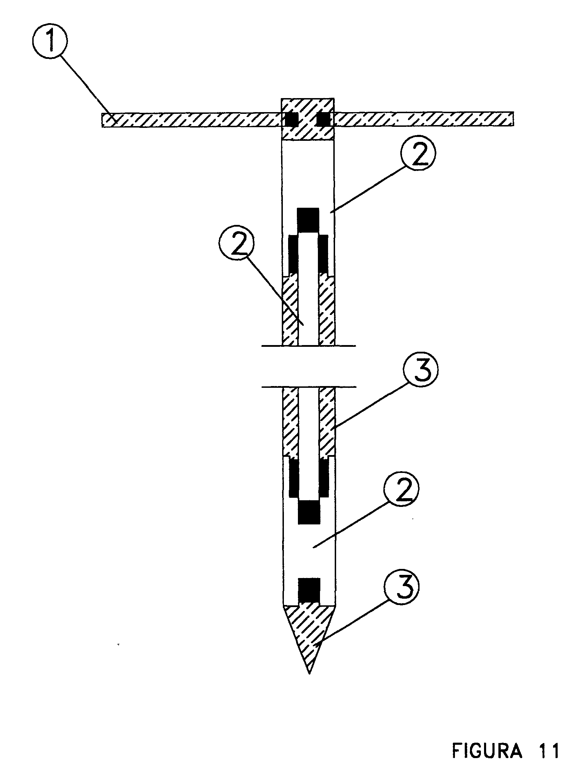

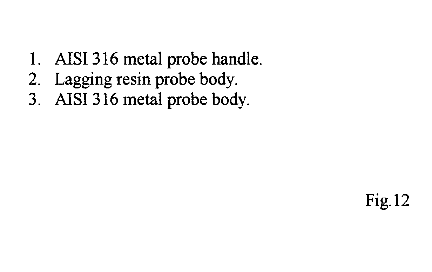

The relative humidity probe (see figures 9 10 11 12) consists of a low electric conductivity resin bar, where two conductive plates, made of AISI 316 steel, are diametrically applied over almost its full length of 1000 mm.

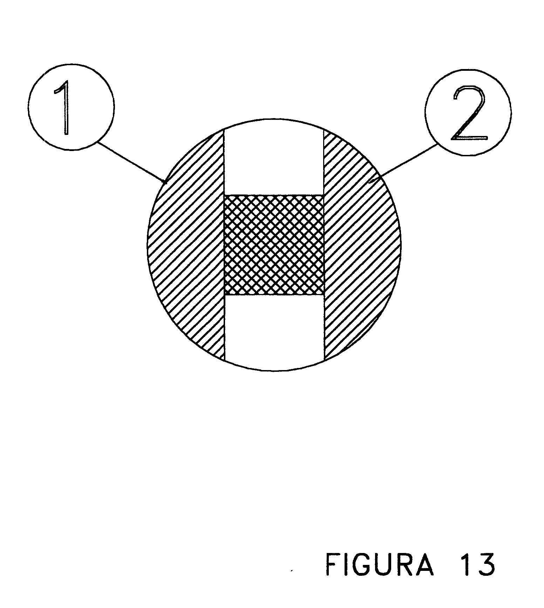

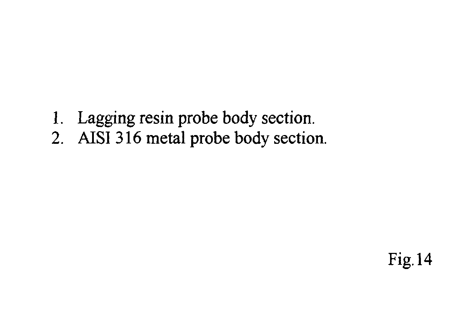

On its lower end, the probe body terminates with a steel push rod and on its upper end with a transverse metal handle, from which the connecting cable, complete with gold plated contacts connector, comes out through a tear resistant cable holder,. The probe operating interval ranges between 0 and 100 %, with a 1% sensitivity and a 2% linearity. Data are visualized on the graphic interface in the specific box related to relative humidity (see figure 13 14).

The correct humidity value inside the heap favors the reproduction of thermophile microorganisms and, consequently, the reduction of treatment time, and eliminates the percolates problem.

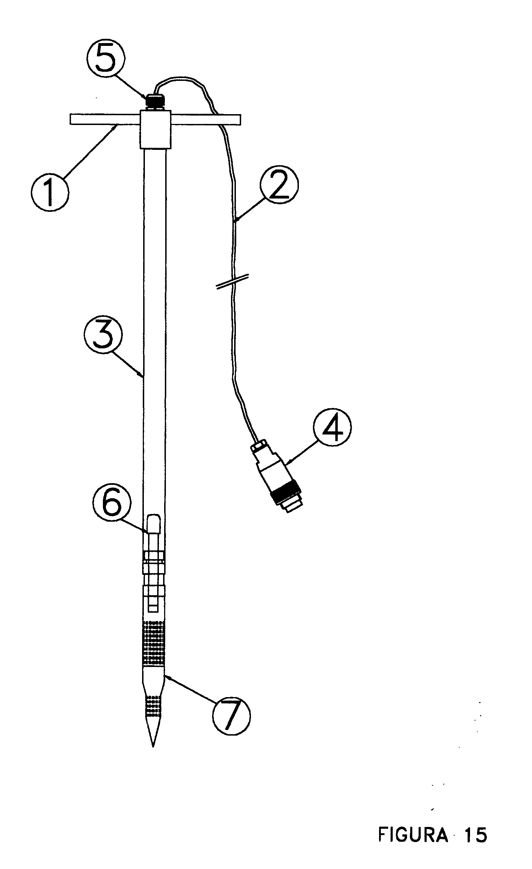

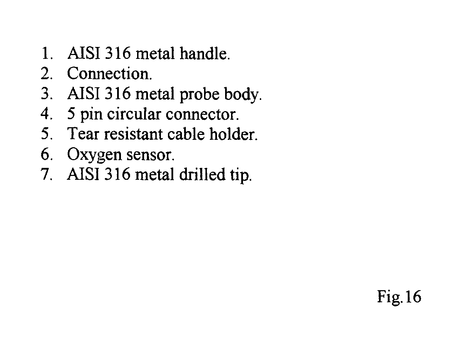

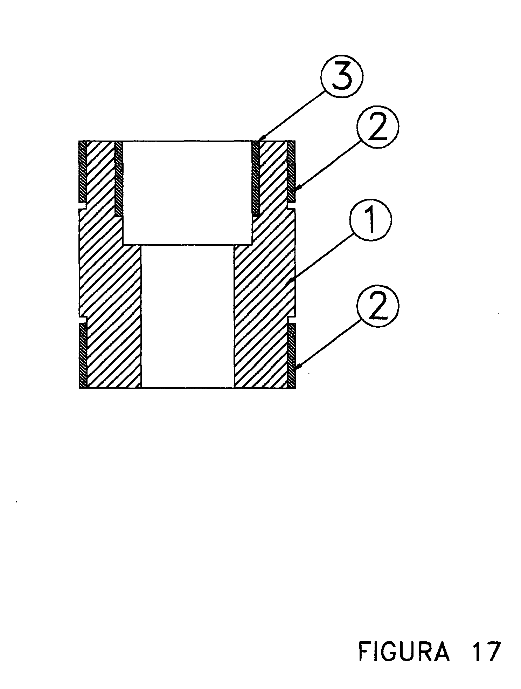

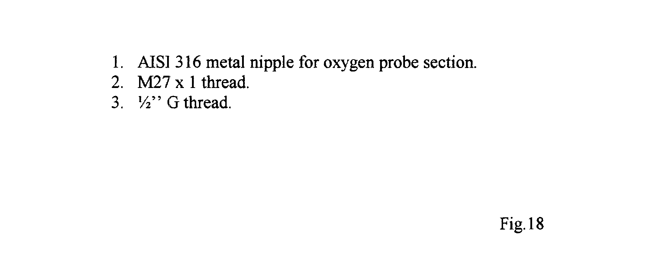

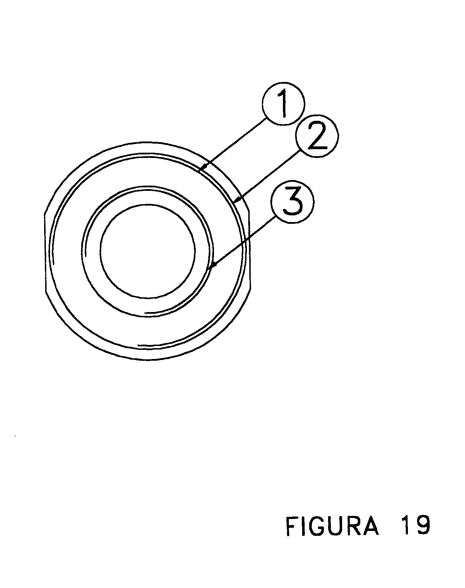

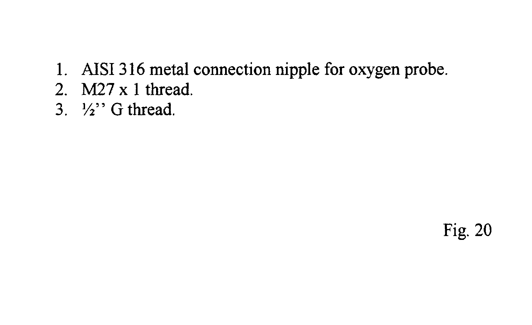

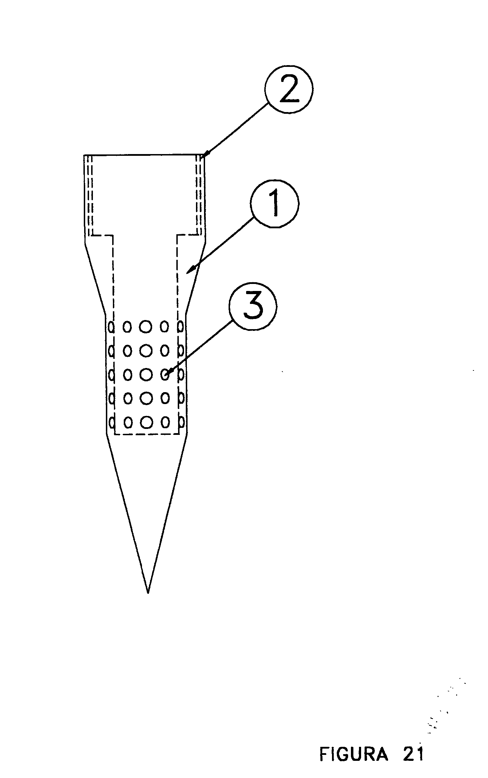

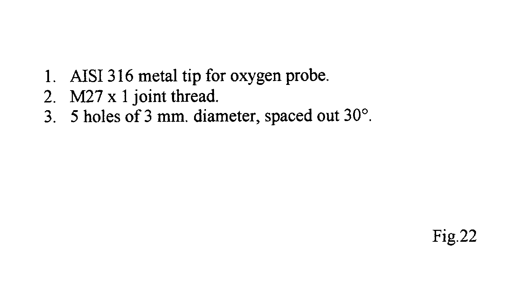

The oxygen probe (see figures 15 16 17 18) consists of an AISI 316 steel bar equipped with handle, wear resistant cable holder and connecting cable complete with gold plated contacts connector, on the upper end.

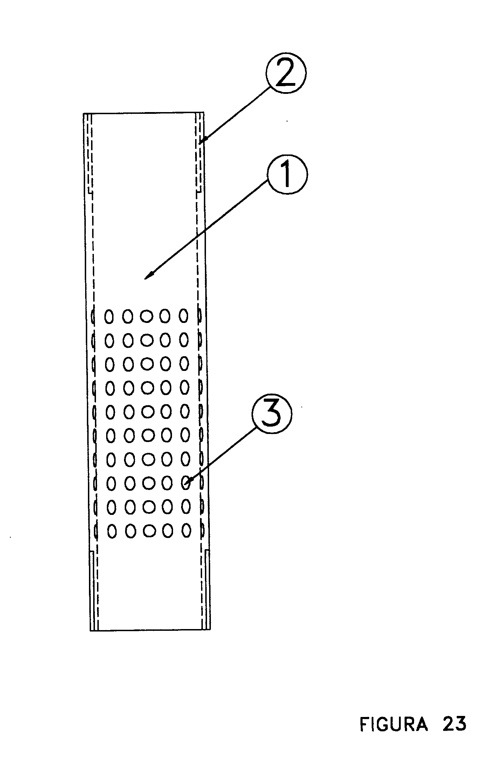

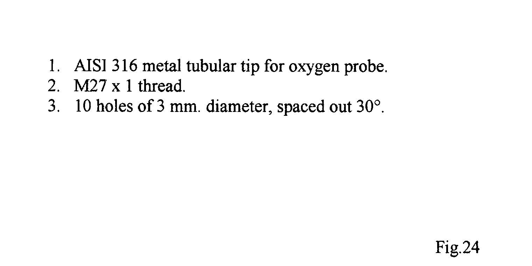

A steel connecting nipple, having a sequence of holes to allow the gas through, is fixed at the lower end of the bar through an M27 x 1 thread. The lower end of the nipple is threaded for screwing onto the steel push rod, also with aeration holes. The total length of the oxygen probe body is approx. 1200 mm. Measurement of oxygen saturation inside the biomass is made by a semiconductive electronic membrane in an electrolytic bath.( 19 20 21 22) The resulting electrolytic process translates the measurement of oxygen saturation into an electric signal, which is read and interpreted by the PLC logic and therefore made availble in a specific file of the PC (see figure 23 24). The oxygen probe operates over a range included between 0 and 21%, with a 0.5% deviation.

The correct oxygen saturation value inside the heap is essential to nourish the biomass aerobic conversion process. An excessive supply of oxygen would involve a too high drying of the product, with remarkable temperature drop, while an insufficient O₂ insufflation would cause an anaerobic situation and, consequently, rottenness and smell formation.

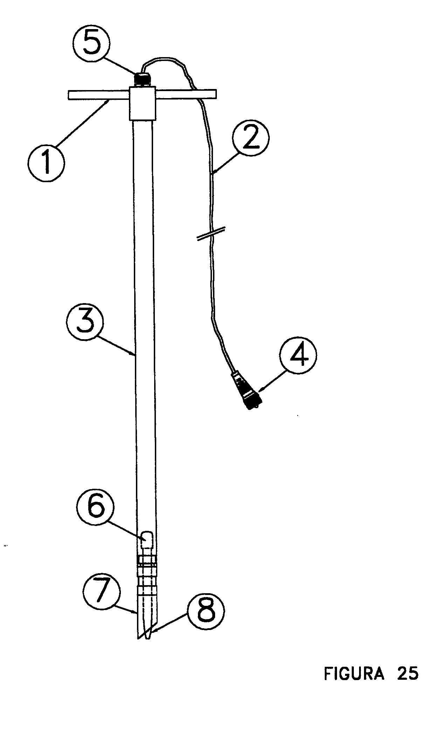

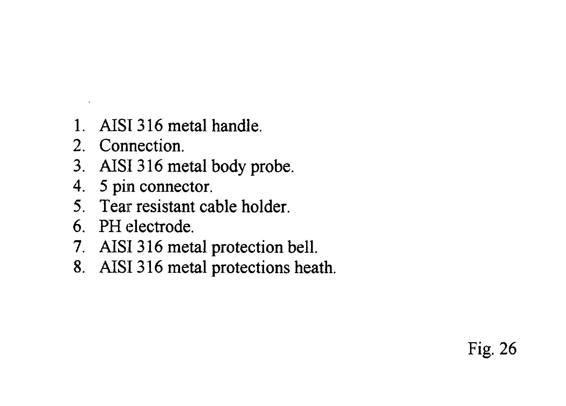

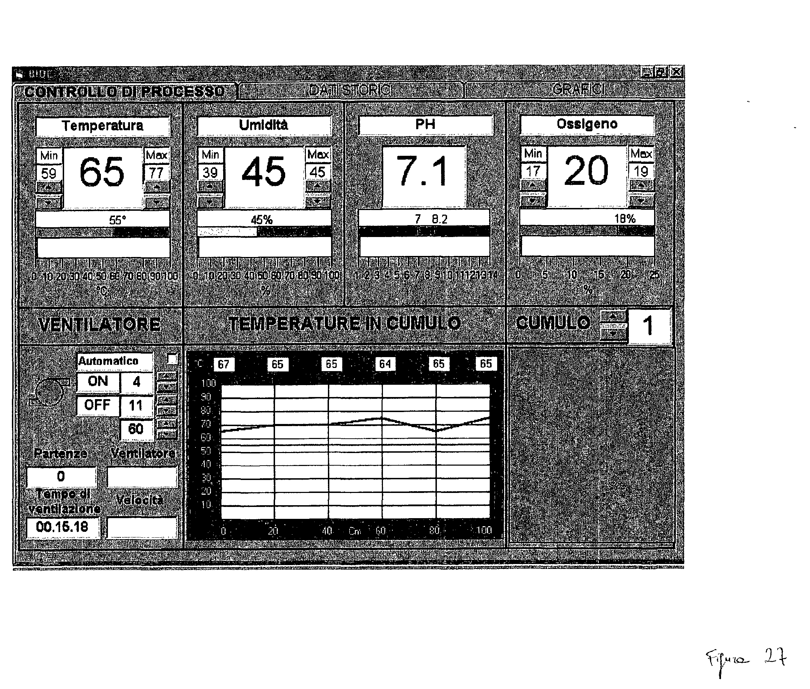

The pH probe (see figure 25 26) is also consisting of an AISI 316 metal body, approx. 1000 mm long,. The upper end is equipped with a metal handle, complete with tear resistant cable holder and connecting cable with gold plated contacts connector. The lower end is equipped with a protecting box housing an electrode to measure the pH value. The electric signal generated by the electrode is sent to the PLC logic and, consequently displayed on the PC screen (see figure 27) in the specific pH file. The probe operating interval covers the pH range included between 1 and 14 and its output gives useful indications on the process evolution, thus favoring the optimization of the biomass carbon/nitrogen ratio.

The advantages of the process here described allow a convenient valorization of the wastes organic component to produce a quality compost with reduced maturation time.

Thanks to this invention, it is possible to produce a marketable first quality compost, therefore complying with law regulations, within 21 days from the process start-up, as compared to the 6 - 8 weeks required by the traditional processes with open air aerated heaps, subject to turn over.

The compost obtained with this process finds its use in the market as a fertilizer for agriculture, amending product for gardening activities, soil mixtures in substrata (humus), or as refarming product for dumps or road slopes.

## Claims

1. It uses a biostabilization process of the humid component of the wastes organic portion, with excellent results both at the level of release of smells, bacteria, fungus hyphae and percolates, and in terms of processing speed, volumes of materials to be treated and volumes of compost material..

2. The system presents a wide applicability, since it is effective with all those wastes presenting even a minimum portion of organic component.

3. The system is ecologically compatible and tolerable.

4. The system allows to process high quantities of materials.

5. The systems is fully complying with the requirements of the laws presently in force on the subject of wastes disposal and environment.

6. The subject invention exploits an oxidation exothermic reaction by insufflating ambient air into a trapezoidal heap of wastes.

7. The system allows to produce both first quality and second quality composts.

8. The holes of the ducts insufflating air inside the heap, and the materials they are made of, have been designed in order to optimize oxidation inside the heap itself.

9. Air insufflation is assured by a powerful fan, located behind a concrete containment wall.

10. The fan must assure a modular operation such as to overcome the problems connected to possible loss of load, which may occur inside the ventilation ducts.

11. The constant level of insufflated air prevents anaerobic situations which could result into rottenness.

12. Thanks to the fact that ducts are slightly sloping towards the connecting pipe, any percolating liquid, which might form at the initial stages of the heap treatment process, is collected into specific tanks.

13. The trapezoidal arrangement of the material to be processed, favors the good operation of the system, assuring an homogeneous air distribution.

14. The heap is protected from the environment by a foam PTFE membrane, assuring protection from UVA radiation and weather conditions, and making it possible to carry out wastes biostabilization in the open air (with obvious logistic advantages), and to limit the release of bad smells associated with wastes.

15. The high temperature variation between the outside and the inside of the heap generates a chemical and physical effect by which the molecules of the most smelling compounds return to the liquid stage, thus providing new humidity to the heap. This favors the optimum development of the thermophile bacterial flora, essential to the bio-stabilization process.

16. The cover on the heap is fixed to the ground through a specifically designed high sealing system.

17. The cover is laid on the heap in sections, whose junction is assured by velcro tapes.

18. This invention allows to achieve the results here described within a maximum of 15 - 20 days.

19. This system does not involve that heaps are turned over.

20. Particular probes are used to control the regular operation of the process making the object of this invention; specifically, they provide control over the main process parameters, i.e. temperature, humidity, oxygen and pH.

21. The data measured by each probe are sent to a PLC circuit, handling the parameters through a specific software:

22. Each PLC circuit can handle up to three heaps (three sets of probes)

23. Each PC is able to handle the data coming from more PLC circuits.

24. The probes cables come out from the cover through a tear resistant cable holder.

25. The system acts on the process variables in such a way not to create process unbalances, thus assuring the achievement of the final result.

26. The compost so produced is a high quality one.

27. The compost production times are remarkably limited and favor the user in terms of plant management, costs, volumes of material processed and quality achieved.

28. Thanks to the quality achieved, the compost produced has a wide range of applications.

29. The use of a specific software to keep the staff required for plant operation to a minimum.
